# EUROPEAN PATENT APPLICATION

(11) **EP 1 300 900 A1**
(43) Date of publication of application: **09.04.2003**
(21) Application number: 01123747.6
(22) Date of filing: 04.10.2001
(51) Int. Cl.: H01M 8/04

(54) **Fuel cell system and method for operating the same**

(71) Applicant: Ballard Power Systems AG, 73230 Kirchheim / Teck-Nabern (DE)
(72) Inventor: Corless, Adrian, V3L 1K8 New Westminster, BC (CA); Mufford, Edward, V2Z 1Z5 Langley, BC (CA); Mulvenna, Alan, V7N 2S2 North Vancouver, BC (CA); Schmidt, Gerhard, BC, V4M 2X9 (CA)
(74) Representative: Beyer, Andreas, Dr.

(57) **Abstract**

A fuel cell system comprising a fuel cell (2) comprising an anode with a fuel feed line to feed fuel to the anode (2.1) and an anode exhaust line (4) for removing anode exhaust from the anode, a cathode (2.2) with an oxygen feed line (5) to feed oxygen to the cathode and a cathode exhaust line (6) to remove cathode exhaust from the cathode, a compressor (7) arranged in the oxygen feed line for feeding oxygen to the cathode and a cooling circuit (10) for cooling the fuel cell, where a fluid connection (12) is arranged between the oxygen feed line (5) downstream the compressor (7) and a coolant tank (8) in the cooling circuit.

## Description

The invention relates to a fuel cell system and a method for operating the same in accordance with the preamble of the independent claims.

In fuel cell systems the fuel cell requires that the difference between the pressures of various media in side the fuel cell be kept in a very tight range. This requirement does not only hold for the difference in pressure between the oxidizing medium at the cathode side of the fuel cell and the hydrogen at the anode side of the fuel cell but also for the coolant in the cooling circuit of the fuel cell stack. Water is a preferred coolant used in fuel cell systems. The water pump used for circulation of the coolant usually runs at a low pressure this pressure being lower than e.g. the pressure of the air compressor. This leads to a larger pressure difference than allowed during normal operation.

In patent application JP A 03280360 a fuel cell system is disclosed where a compressor and a pressure control valve are used to vary the gas pressure in the fuel cell system. However, there is no means disclosed to adjust the coolant pressure to the variable gas pressure so significant differences may occur in pressure between the coolant and the gas system which may do harm to the fuel cell stack.

The invention is based on the object of specifying a fuel cell system where a pressure difference between the coolant and the pressure in the cathode of the fuel cell can be reduced and a variation in pressure can be easily adjusted.

This object is achieved in the case of a fuel cell system having the features of Claim 1 and in case of a method according to Claim 5.

The invention allows for an easy adjustment of the coolant pressure in the fuel cell to the pressure inside the cathode and/or the oxygen system of the fuel cell. If the oxygen system pressure varies the coolant pressure automatically is adjusted.

Further advantages and refinements of the invention emerge from the rest of the claims and the description.

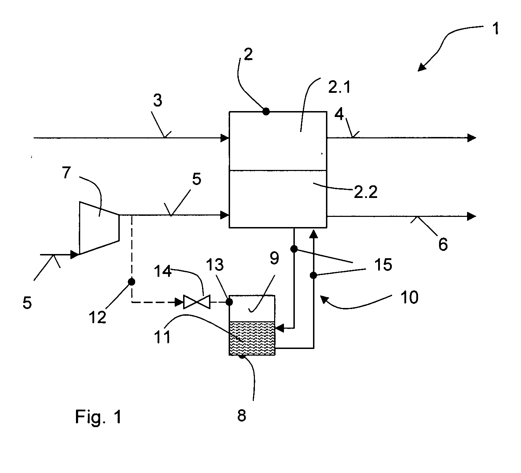

The invention is explained in more detail below with reference to a drawing, in which the only figure shows a schematic embodiment of a preferred fuel cell system according to the invention.

The invention can be advantageously used in vehicles where a fuel cell system is used to supply electric energy for traction and/or low power requirements. It is applicable to hydrogen fuel cell systems where pure hydrogen is fed to the fuel cell system from a storage tank as well as to fuel cell systems exhibiting a gas generation system for hydrogen production with carbon hydrates or hydrogen compounds as fuel.

A preferred embodiment of a fuel cell system according to the invention is shown schematically in the figure. Details of the fuel cell system as a probably existing gas production system comprising reactors, heat exchangers, feed systems and/or a fuel tank, control equipment etc. are not shown.

A fuel cell system 1 comprises a fuel cell 2. The fuel cell 2 exhibits an anode 2.1 with a fuel feed line 3 to feed fuel to the anode 2.1 and an anode exhaust line 4 for removing anode exhaust from the anode 2.1, a cathode 2.2 with an oxygen feed line 5 to feed oxygen to the cathode 2.2 and a cathode exhaust line 6 to remove cathode exhaust from the cathode 2.2. The fuel may be hydrogen or a hydrogen reformate gained from a carbon hydrate or a hydrogen compound as already indicated above. A compressor 7 is arranged in the oxygen feed line 5 which feeds oxygen to the cathode 2.2. The denotation "oxygen" refers to more or less pure oxygen gas or an oxygen comprising medium, where air is a preferred medium as an oxidizing fuel for the cathode 2.2 of the fuel cell 2.

The fuel cell 2 is cooled by a cooling circuit 10, with a cooling circuit comprising feed lines 15 to and from a fuel cell cooling compartment and a coolant storage 8, preferably a header tank, allowing a coolant 11 to circulate from the coolant tank 8 to the fuel cell 2 and back.

A fluid connection 12 is arranged between the oxygen feed line 5 downstream the compressor 7 and a coolant tank 8 in the cooling circuit 10. Said fluid line 12 is connected to the preferred coolant header tank 8 via input 13, thus the pressure of the oxygen side of the fuel cell 2 acting directly on the cooling circuit by pressurizing the coolant. So, as the oxygen system pressure changes e.g. due to the actual load of the fuel cell system, so does the coolant pressure in the tank 8 and the cooling circuit 10.

Advantageously, said coolant tank 8 is equipped with a vent 8, favourably an orifice vent 14, which is adjusted to produce the required pressure in said tank 8.

The invention eliminates the need for complicated and independent operation of the water pump to supply the required water pressure in the fuel cell 2. By directly pressurizing the coolant by the oxygen an allowable pressure difference is tightly controlled and the coolant pressure instantly adapts to the oxygen system pressure in the cathode 2.2.

## Claims

1. A fuel cell system (1) comprising a fuel cell (2) comprising an anode (2.1) with a fuel feed line (3) to feed fuel to the anode (2.1) and an anode exhaust line (4) for removing anode exhaust from the anode (2.1), a cathode (2.2) with an oxygen feed line (5) to feed oxygen to the cathode (2.2) and a cathode exhaust line (6) to remove cathode exhaust from the cathode (2.2), a compressor (7) arranged in the oxygen feed line (5) for feeding oxygen to the cathode (2.2) and a cooling circuit (10) for cooling the fuel cell (1),
**characterized in**
**that** a fluid connection (12) is arranged between the oxygen feed line (5) downstream the compressor (7) and a coolant tank (8) in the cooling circuit (10).

2. A fuel cell system according to Claim 1,
**characterized in that** said fluid line (12) is connected to a coolant header tank (8).

3. A fuel cell system according to Claim 2,
**characterized in that** said coolant tank (8) is equipped with a vent (14) adjusted to produce a desired pressure in said tank (8).

4. A fuel cell system according to Claim 3,
**characterized in that** said vent (14) is an orifice vent or a variable orifice vent (14).

5. A method for operating a fuel cell system where a fuel is fed to an anode (2.1) of a fuel cell (2) and oxygen compressed by an compressor (7) is fed to a cathode (2.2) of said fuel cell (2),
**characterized in that** the coolant (11) in the coolant tank (8) is directly pressurized by the oxygen in the oxygen.

6. A method according to Claim 5,
**characterized in that** an appropriate pressure in the coolant tank (8) is established by a vent (14).

7. A method according to Claim 5,
**characterized in that** the pressure of the coolant (11) varies with the pressure in the oxygen system.
